# EUROPEAN PATENT SPECIFICATION

(11) **EP 0 753 481 B1**
(45) Date of publication and mention of the grant of the patent: **05.12.2001**
(21) Application number: 96304488.8
(22) Date of filing: 17.06.1996
(51) Int. Cl.: C01B 31/06

(54) **Hydrophilic diamond particles and method of producing the same**
Hydrophile Diamantteilchen und Verfahren zu ihrer Herstellung
Particules hydrophiles de diamant et méthode pour les produire

(30) Priority: 10.07.1995 JP 20639995
(43) Date of publication of application: 15.01.1997
(73) Proprietor: THE ISHIZUKA RESEARCH INSTITUTE, LTD., Hiratsuka-shi Kanagawa-ken (JP); Hiraki, Akio, Kusatsu-shi, Shiga-ken (JP)
(72) Inventor: Hiraki, Akio, Kusatsu-shi, Shiga-ken (JP); Ito, Toshimichi, Minoo-shi, Osaka-fu (JP); Hatta, Akimitsu, Suita-shi, Osaka-fu (JP); Makita, Hiroshi, Kawanishi-shi, Hyogo-ken (JP); Nishimura, Kazuhito, Kita-Kyushu-shi, Fukuoka-ken (JP); Ishizuka, Hiroshi, Shinagawa-ku, Tokyo (JP); Hosomi, Satoru, Oyama-shi, Tochigi-ken (JP)
(74) Representative: Baverstock, Michael George Douglas

(56) References cited:
- DATABASE WPI Section Ch, Week 8205 Derwent Publications Ltd., London, GB; Class L02, AN 82-08679E XP002015242 & JP-A-56 163 881 (MATSUSHITA ELEC IND KK) , 16 December 1981
- DATABASE WPI Section Ch, Week 8651 Derwent Publications Ltd., London, GB; Class A97, AN 86-334830 XP002015243 & JP-A-61 249 267 (HITACHI METAL KK) , 6 November 1986
- DATABASE WPI Section Ch, Week 9344 Derwent Publications Ltd., London, GB; Class E36, AN 93-349365 XP002015244 & SU-A-1 770 271 (SHEBALIN A I) , 23 October 1992
- DATABASE WPI Section Ch, Week 7722 Derwent Publications Ltd., London, GB; Class E36, AN 77-38644Y XP002015245 & JP-A-50 104 791 (KOBE STEEL KK) , 19 August 1975
- DATABASE WPI Section Ch, Week 9417 Derwent Publications Ltd., London, GB; Class E36, AN 94-142592 XP002015246 & SU-A-1 794 888 (BRYLYAKOV P M) , 15 February 1993
- DATABASE WPI Section Ch, Week 7536 Derwent Publications Ltd., London, GB; Class L02, AN 75-59909W XP002015247 & SU-A-458 336 (PLUZHNIK V I) , 11 March 1975

## Description

This invention relates to fine particles of hydrophilic diamond, as indicated in claim 1, which can effectively provide a single layer of particles when used in lubrication, surface modification, abrasive applications, etc. The invention also relates to a method of effectively producing such a form of diamond as indicated in claim 4.

Fine powders of diamond less than one micrometer in nominal average particle size (APS) are available on the market as a grinding medium, and even superfine powders of 5 nm (nanometers) for lubrication, surface modification and polishing applications. They are often used with a specific dispersion medium, in order to achieve a uniform deposit of single particle thickness on a support body, or a regular distribution of separate particles in a matrix.

Diamond particles are often at a decreased surface energy level due to combination with different atoms or groups, although the surfaces may sometimes be made up of carbon atoms joined with each other. Thus the physical and chemical properties of diamond particles are affected by their surface state, increasingly with decrease in particle size, and essentially for submicron sizes, in addition to their bulk properties. So the dry agglomeration and affinity of the particles to aqueous or oily media in particular, depend essentially on the atoms or groups adsorbed or combined with carbon atoms in the surface layer. Possible atoms and groups are collected and outlined, along with techniques for providing them, by N. V. Novikov in "The Physical Properties of Diamond", Naukova Dumka (1987).

Diamond fine powders are commonly prepared by crushing coarser particles of either natural or synthetic origin, the latter being produced by static compression at high temperatures in a hydraulic press or dynamic compression by means of explosive detonation. The resulting particles, natural or synthetic, assume a set of specific properties which vary with the differing set of physical and chemical processes to which they were subjected on the way to the end products.

Diamond from a hydrostatic press, for example, contains metallic or nonmetallic substances which derive from the flux and specimen accommodation materials employed in the process, and which exist in the crystals as an impurity. Some kinds of impurity may be removed and the powder can be purified to a degree, as the particles undergo chipping or splitting during the crushing process, preferentially at crystal defects and expose the foreign substance within, which will be dissolved during the acid treatment. However there are other impurities, including chromium from the crushing machine and graphite remaining unconsumed and trapped in the particles which then are exposed or released by the breakdown. Being insoluble in acids, they accumulate in the solution and accompany the finest fraction when recovered. As a result, the class zero diamond powders, which contain the undersize end, often exhibit a light to dark grayish color due to these impurities.

As for the dynamic compression synthesis technique, whose mechanism has not fully been understood, diamond fine powders contain impurities whose origin is not always identified. However there are some elements, beside graphite, which should evidently derive from the specimen receptacle material or, at least, the matrix material for the process.

Synthetic diamonds in general may be somewhat more hydrophilic than natural ones as a result of the treatments which the former undergo, before they are isolated as separate particles, with or in various chemical solutions which can leave oxygen atoms or hydroxy groups combined with carbon atoms on the particle surface. However such quality even causes a problem in establishing a reproducible size grading of micron sizes by affecting the Stokes's relationship between particle size and sedimentation rate in the elutriation process. If so, the treated diamond particles in general are not in a surface state which would form a stable suspension or dispersion in a polar solvent such as water and alcohol.

Besides oxygen and hydroxy atoms and groups, the presence of several elements as impurities has been recognized by ICP spectrometry or inorganic qualitative analysis. They include Si, Al, Fe, Cr, Mn, Cu, Ca, S and C. It appears that some of these are somehow interactive with the surface of diamond particles whichever production process is used, and causes agglomeration of said particles in an aqueous environment. Thus impurities make most of the fine diamond powders so far available tend to form an agglomeration, which is almost impossible completely to break down in a polar or nonpolar medium, even under ultrasonic vibration. It is further observed that such fine particles, once separated, readily gather and form again an agglomeration and begin to sediment.

Diamond fine powders are promising materials for use in tribologic and abrasive applications as well as surface modification, if they can be successfully separated into single particles and distributed in a matrix or spread on a carrier body. While it is understood that such a quality can be achieved by either eliminating the above interaction or by improving the wettability of the diamond surface with the medium employed, no effective techniques have been available for these purposes.

Metal or ceramic materials coated with diamond fine particles could be useful as a wear resistant material. It is essential, however, to keep the diamond particles in stable suspension, with the diamond concentration or particle distribution unvarying over the deposition process, for example.

Therefore one of the principal objects of the invention is to provide diamond fine particles with a surface nature so improved as to be able to form a stable, uniform suspension or dispersion in a common medium such as water and alcohol.

Another object is to provide an effective technique for producing hydrophilic diamond fine particles by chemically modifying the nature of the particle surface, while removing at the same time contaminants and foreign materials which coexist with the diamond.

In the invention diamond particles are treated by boiling in a treatment fluid of sulfuric acid solution, which is in particular of a concentrated or fuming nature, at a temperature more than 200°C, which is preferably 250°C or more. Thus hydrophilic diamond fine particles are produced and recovered with hydrophilic atoms and/or groups formed on the surface, while contaminants and foreign matter are removed from among the particles or from the surface in a chemically decomposed form and dissolved in the solution.

Said treatment fluid may further comprise one or more of nitric, perchloric and permanganic or other inorganic acid as an oxidizer, as well as potassium or other metalnitrates. They are used essentially in combination with concentrated or fuming sulfuric acid, in order to achieve a corresponding effect at lower temperatures.

Results are more appreciable and the increase in suspension stability is greater with finer particles. Coarser particles are more susceptible to gravity and thus are more difficult to hold in a good suspension in a medium for a sufficient time. Thus the method of the invention employs average particle sizes of or less than 2 µm (micrometer), and the diamond particles as treated are held in suspension practically without sedimentation in purified water for, at least, 30 minutes when in 2 µm size and more than 2 hours when 1 µm or less size. Even finer particles can exhibit an even longer suspension holding time of, for example, more than 24 hours for a size of 200 nanometers or less. A suspension time of 6 hours or more is also achieved with such ultrafine particles in a pH 4.0 acidic aqueous solution an inorganic acid. A hydrophilic diamond surface which allows such good suspension is produced by the method of the invention with good reproducibility.

Since polar media such as water and alcohol are commonly used in which to distribute diamond particles, the latter should be more favored as being more versatile if, and when, they are of a hydrophilic nature and, at the same time, free of contaminants or foreign matter on or among the particles. If impure diamond particles tend to agglomerate in acidic media, an alkaline solution cannot always be used but just employed sometimes, for the purpose of keeping the particles in suspension.

The distribution of diamond particles in an aqueous medium is also affected by the presence of some ion species. Thus hydrophilicity is essentially evaluated in the invention in terms of suspension stability or the duration for which the suspension is sustained in a purified aqueous medium at pH = 7.0 of deionized or distilled water.

The diamond particles of the invention are produced, essentially, by providing fine diamond particles of APS of or less than 2 µm, placing and heating said diamond particles in an oxidizing medium at a temperature of at least 200° and preferably 250°C, whereby hydrophilic atoms and/or functional groups such as C=O and OH, for example, are provided on the surface of the diamond. Contaminants and foreign matter are also removed at the same time.

The treatment temperature should not exceed 350°C since oxidization loss is noticeable at said temperature and higher temperatures, with particle size less than 1 µm.

For coarser particles greater than 1 µm, a higher temperature of 400°C is considered as the upper limit because of availability of the equipment material and process controllability, although the oxidization loss becomes significant only above 500°C, approximately.

In the sulfuric acid treatment of the invention metallic impurities and graphite are oxidized by SO₃ so as to be dissolved as a sulfate and to form a gaseous process A highly acidic aqueous solution, which forms when the treatment solution is diluted with water upon the termination of the process, is very effective for the removal of metallic impurity and thus the probable nuclei and origins of particle agglomeration. At the same time oxygen atoms are combined with carbon atoms to form C=O bonds, or further to OH groups by subsequent hydration on the treated diamond particles, which as a result should probably acquire a hydrophilic nature. Such effects are more apparent with finer particles, with a stable suspension in a pH 4.0 acidic solution of inorganic acid holding for at least 6 hours with an average particle size of or less than 200 nm.

Nitric, perchloric, chromic and permanganic acid as well as potassium or other metal nitrates are available singly or in combination as an oxidizer and added to the basic solution of sulfuric acid, in order to decrease the treatment temperature. With the oxidizer, as a surface analysis showed the presence of C=O and OH, it can be assumed that a corresponding process takes place as in the oxidizer-free fluid but at lower temperatures.

It is not essential to the invention but optional as desired, that treatment with perchloric, hydrofluoric acid or a molten alkaline salt may be added either before or after the sulfuric acid treatment, in order to remove principally graphite, silica or silica and alumina, respectively.

The hydrophilic fine powder of diamond of the invention exhibits good resistance to agglomeration: it disperses, apparently in single particles, as soon as put in water, to form an opaque fluid. In fact particle size measurement suggests that they are distributed completely in single or small agglomerations of particles, and thus they are covered with hydrophilic atoms or groups. Breakdown of the powder, for example by ultrasonic vibration is usually unnecessary.

Since the diamond particles of the invention, as described above, exist in suspension practically singly or particles which are only agglomerated to a small extent, they can be used to form a monoparticle layer or a mixture of high uniformity with another particulate substance. Here the concentration can be controlled, as necessary, or a homogeneous mixture with a monomer in the production of plastic material can be achieved by using a solvent which exhibits mutual solubility with water.

The diamond powder of the invention can be used in various ways. A starting material for conventional clustered diamond powder can be treated by the method discribed above to prepare a suspension in a water/alcohol mixture. A sheet of silicon is dipped to deposit a layer of diamond fine particles, and used in a diamond CVD process as a substrate with a high concentration of nucleation sites.

By a similar technique a sheet of metal or plastic, for example, may be dipped in or spread over with a suspension of submicron diamond particles, in order to prepare an abrasive sheet practically free of irregularity in particle size or distribution.

An abrasive tool with a few micrometer diamond particles uniformly distributed in the matrix can be produced by first preparing a suspension of treated diamond particles, which then is mixed with a fluid or powder of matrix material.

The invention will now be illustrated by means of examples, in which the starting point of sedimentation is defined as the time when a clear top has become noticeable during observation in a test tube, left standing, of a 25 ml sample suspension, which is taken from a bulk prepared from 200 mg of diamnd particles in 100 ml of purified water of pH = 7.0. Particle sizes are evaluated by centrifugal sedimentation for the 300 nm or lesser sizes, while laser diffraction scattering technique was used for coarser particles.

### Example 1

Commercial cluster diamond of nominal average size of 5 nm was used as a starting material. This was a dark brown powder of agglomerated secondary particles when observed by optical microscopy at a magnification of 400. They were subjected to ultrasonic vibration in water or acetone, but it was almost impossible tobreak them down into single particles. In fact, afterwards they looked as if separated for some time, but they readily gathered again and began to sediment. They were then heated in concentrated sulfuric acid to about 100°C for 2 hours and rinsed fully in water. When placed in purified water, however they began to sediment after a couple of minutes.

20 grams of such diamond particles were put in a flask which was filled with 200 ml of a mixture of 5% conc. HNO₃ and 95% conc. H₂SO₄, subjected to ultrasonic vibration to break them down, and then heated at 300° to 320°C for 2 hours. The acid medium, as cooled down, was diluted with an adequate volume of water, separated in a centrifugal separator, rinsed with water and dried. A grayish brown fine powder was recovered as a result. As simply added to purified water, it readily spread, without ultrasonic vibration, in almost unnoticeable particles to form a grayish fluid, which were held in suspension from settling and showed no practical change over 72 hours.

Then sulfuric acid was added to the suspension to control the pH to 4.0 and set a slight acidity. There was no noticeable sedimentation after 12 hours, and a stable suspension was sustained also in this case with modest acidity.

Then the diamond was used for originating the nucleation in a diamond CVD process. 0.1 gram of clustered diamond, as treated, was added to 1 liter of purified water. 1 volume part of the suspension was further mixed with 2 parts of methyl alcohol to prepare the treatment fluid, in which a silicon sheet was dipped briefly, dried with a toilet hair drier, and placed in a chamber for a microwave plasma diamond CVD process. After 10 minutes, an approximately 50 nm uniformly thick deposit was recognized. The nucleation density, evaluated after the first 5 minutes, indicated a nucleus density of about 5 x 10¹¹ per 1 cm². This means that even more diamond particles were distributed uniformly on the silicon sheet by the dipping and were available as nucleation sites.

### Reference

For the purpose of comparison, another suspension was prepared by adding micronsize diamond with ultrasonic vibration as a conventional technique. A silicon sheet was dipped and scratched on the surface, and subjected to a CVD process at parameters corresponding to the above. The nucleus density was 1 x 10¹⁰ at a maximum 2 to 4 hours of the process was necessary before a uniformly thick deposit was achieved.

### Example 2

0-1/4 size grade diamond was treated. This was a dark gray fraction of 180 nm average particle size, separated and recovered by a centrifugal separator from the 1/4 size and coarser sizes. The quasi-quantitative analysis by ICP indicated a concentration of 0.1 to 0.2% for each of Al, Si, Cr and Fe, as impurities.

500 ml of sulfuric acid was added to 100 grams of the diamond powder, which was then heated at 280 to 320°C for 6 hours, and further treated with hydrofluoric acid. The recovered powder was clear white, and the ICP analysis indicated each impurity content at less than one tenth the initial levels. Also as analyzed by IR absorption the diamond particles exhibited the existence of the functional groups OH and =C=O on the surface. The treated particles, when added to purified water, formed a white suspension, which held from settling for more than 48 hours. The suspension was sustained for more than 6 hours in a hydrochloric acid solution at an acidity of 4.0.

Raman spectroscopy was employed for the evaluation of the treatment of the invention with diamond particles before and after the treatment. While untreated particles, on laser irradiation, burnt explosively by energy absorption, so the observation could not be continued, the treated powder, without any difficulty in observation, yielded a clear record showing exclusively the spectrum for diamond.

Treated diamond particles were held in suspension and deposited by electrolysis. A substrate of 10 mm thick SUS (JIS) stainless steel strip was polished in a 100 x 100 mm area for the deposition. 5 grams of the diamondwere put in 1 liter of plating solution along with 300 grams of nickel sulfate and 50 grams of nickel chloride. The electrodeposition was continued, without forced agitation, at a pH of 4.5, a temperature of 50°C, and a density of 2 A/dm², until a 5 µm thick layer was deposited.

An SEM observation showed that some 25 vol. % diamond particles were anchored with nickel. The coated steel strip was successfully used as a chute material for a ceramic forming press.

### Example 3

0-2 micronsize diamond was treated. This was a gray fraction of 1.06 µm average particle size, separated and recovered by the technique used in example 2, from the 2 µm and greater sizes.

500 ml of sulfuric acid and 50 mg of KNO₃ were added to 100 grams of the diamond powder, which was then boiled by heating at 210° to 230°C for 3 hours. The recovered powder was clear white, and, when put in purified water, formed an opaque fluid, which held in suspension without any noticeable sedimentation during 12 hours of observation, in comparison with untreated diamond powder which began to sediment an hour after adding to the medium.

The treated powder was deposited along with nickel metal by the technique described above and at the corresponding parameters to a 10 µm thickness on a 30 by 600 mm rectangular area of an SUS 304 grade stainless steel work holder blank for a centerless grinder. The diamond deposited work holder remained useful for more than 3 months in the grinding of sintered alumina, in comparison with undeposited holders which needed to be replaced every two weeks because of severe wear.

### Example 4

2-3 grade micronsize diamond powder was treated. It comprised grayish white particles of 1.98 µm average particle size. 200 grams of the powder was put in 800 ml of sulfuric acid, heated and boiled for 2 hours at 210° to 240°C, while adding chromic acid intermittently, so that the chromate red was maintained. The recovered powder as cooled down and fully rinsed was white and, when put in purified water, formed an opaque suspension. Sedimentation remained unnoticeable two hours after the suspension was formed, in comparison with the untreated powder which showed a significant sedimentation immediately after it was put in the water.

100 ml of methyl alcohol was poured onto 10 grams of the treated diamond powder to form a suspension, which was further mixed with 50 grams of phenolic resin and then fully agitated. The mixture was moderately heated to evaporate the alcohol until a thick fluid was obtained, which was then cast into a mold, pressed at 200 kg/cm² while heating at 190°C, in order to manufacture a 150 mm O.D., 100 mm I.D. type 6A2 cup wheel. The product tool, which was basically for use in the preparation of microscopic specimens of carbide alloy, comprised a working part of practically single diamond particles distributed in the matrix.

### Example 5

So-called grade-zero micronsize diamond particles were put in water to form a suspension and left standing for 24 hours. The fluid was separated in a centrifugal separator into the clear top and solid, and the latter, which comprised black particles of 90 nm average particle size, was recovered for the treatment of the invention. 100 mg of the powder was mixed with 500 ml of sulfuric acid and 50 ml of HNO₃, and then boiled for 4 hours at 270 to 300°C. The recovered powder was gray and when put in purified water formed a grayish-white suspension, which showed no noticeable sedimentation 72 hours after it was formed. The fluid was diluted with water to a concentration of 100 ppm., into which a silicon sheet was dipped and placed in a chamber for a CVD process and used for nucleation as described in example 1. Diamond was formed at a nucleus density of about 1 x 10¹¹.

### Example 6

100 grams, constantly, of diamond powders of different sizes were treated in common for an hour at varying parameters. The recovered powders, which were suspended in purified water, were left standing to evaluate suspension stability in terms of the suspension holding time, or the time lapse before sedimentation became noticeable. The results are compared below as well as the parameters used.

| size design | a.p.s. (nm) | sulfuric acid (ml) | oxidizer | | Temp. (°C) | stability (hours) |
|---|---|---|---|---|---|---|
| | | | sort | amount | | |
| 1-2 | 1530 | 500 | - | - | 300-320 | 1 |
| | | 500 | HCIO₄ | 50 ml | 210-230 | 4 |
| 0-1 | 540 | 800 | - | - | 300-320 | 9 |
| | | 800 | HNO₃ | 50 ml | 280-300 | 20 |
| 0-1/2 | 420 | 800 | - | - | 290-310 | 12 |
| | | 800 | KNO₃ | 100 g | 240-270 | 30 |
| 0-1/6 | 140 | 800 | - | - | 290-310 | 30 |
| | | 800 | KNO₃ | 100 g | 240-270 | 60 |
| Note: ∗ average particle size | | | | | | |

As described above in detail, diamond superfine particles of modified surface nature are provided by the invention, whereby diamond particles are intensely heated in sulfuric acid in order to impart a hydrophilic nature, while coexisting contaminants are removed. The particles when put in water form a stable suspension which is very resistant to settling.

Diamond particles so treated have various possible applications: cluster diamond, for example can be treated and added to purified water to form a suspension. A silicon sheet may be dipped in it to deposit a layer of densely and uniformly distributed diamond particles which allow nucleation and subsequent growth of substantially increased diamond particles on the sheet, thus producing a film improved in thickness uniformity.

## Claims

1. A mass of hydrophilic diamond particles, which are capable of separating into single-particle state in dispersion medium, and which comprise fractions of following single-state average particle size (APS), at least 90% weight part of which exhibits, in purified water at a pH of 7.0, a suspension holding time (SHT) listed below:
| APS in nanometers | SHT in hours |
|---|---|
| Less than 200 | 24 or more |
| 200 or more but less than 500 | 8 or more |
| 500 or more but less than 1000 | 2 or more |
| 1000 or more but less than 2000 | 0.5 or more |

2. The diamond particles as claimed in claim 1, in which said fractions exhibit a suspension holding time (SHT) listed below:
| APS in nanometers | SHT in hours |
|---|---|
| Less than 200 | 48 or more |
| 200 or more but less than 500 | 16 or more |
| 500 or more but less than 1000 | 4 or more |
| 1000 or more but less than 2000 | 1 or more |

3. The diamond particles as claimed in claim 1, in which the fraction of APS of 200 or less exhibits a suspension holding time (SHT) of at least 6 hours in an acidic aqueous medium at a pH of 4.0.

4. A method of producing hydrophilic diamond particles comprising: providing particles of single-state APS not exceeding 2µm from a static compression process or of cluster diamond, placing and heating said diamond particles in concentrated sulfuric acid, at a temperature of at least 200°C, without or with an oxidizer being selected from nitric acid, perchloric acid, chromic acid, permanganic acid, and potassium nitrate, whereby hydrophilic atoms and/or groups are provided on the surface of the diamond and, at the same time, contaminants which exist among and on the particles are removed, and recovering the particles.

5. The method as claimed in claim 4, in which said concentrated sulfuric acid is fuming with absorbed SO₃.

## Patentansprüche

1. Menge von hydrophilen Diamantpartikeln, die sich in einem Dispersionsmedium in einen Einteilchenzustand auftrennen können und die Korngrössenklassen der folgenden durchschnittlichen Einteilchenzustandpartikelgrösse (APS) umfassen, wobei wenigstens 90 Gew.-% davon in reinem Wasser bei einem pH von 7,0 eine unten aufgeführte Suspensionsverweilzeit (SHT) aufweisen:
| APS in Nanometern | SHT in Stunden |
|---|---|
| Weniger als 200 | 24 oder mehr |
| 200 oder mehr, jedoch weniger als 500 | 8 oder mehr |
| 500 oder mehr, jedoch weniger als 1000 | 2 oder mehr |
| 1000 oder mehr, jedoch weniger als 2000 | 0,5 oder mehr |

2. Diamantpartikel nach Anspruch 1, wobei die Korngrössenklassen eine unten aufgeführte Suspensionsverweilzeit (SHT) aufweisen:
| APS in Nanometern | SHT in Stunden |
|---|---|
| Weniger als 200 | 48 oder mehr |
| 200 oder mehr, jedoch weniger als 500 | 16 oder mehr |
| 500 oder mehr, jedoch weniger als 1000 | 4 oder mehr |
| 1000 oder mehr, jedoch weniger als 2000 | 1 oder mehr |

3. Diamantpartikel nach Anspruch 1, wobei die Korngrössenklasse mit einer APS von 200 oder weniger eine Suspensionsverweilzeit (SHT) in einem sauren wässrigen Medium bei einem pH von 4,0 von wenigstens 6 Stunden aufweist.

4. Verfahren zur Herstellung von hydrophilen Diamantpartikeln, umfassend: Bereitstellen von Partikeln mit Einteilchenzustand-APS aus einem statischen Druckverfahren oder aus Cluster-Diamant, welche 2 *µ*m nicht übersteigen, Einbringen und Erhitzen der Diamantpartikel in konzentrierter Schwefelsäure bei einer Temperatur von wenigstens 200 °C, mit oder ohne einem Oxidationsmittel ausgewählt aus Salpetersäure, Perchlorsäure, Chromsäure, Permangansäure und Kaliumnitrat, wobei hydrophile Atome und/oder Gruppen auf der Oberfläche des Diamanten bereitgestellt werden und gleichzeitig Verunreinigungen, die zwischen und auf den Partikeln vorkommen, entfernt werden und Gewinnen der Partikel.

5. Verfahren nach Anspruch 4, wobei die konzentrierte Schwefelsäure rauchende Schwefelsäure mit absorbiertem SO₃ ist.

## Revendications

1. Masse de particules de diamant hydrophiles, qui sont capables de se séparer à l'état de particules distinctes dans un milieu de dispersion, et qui comprennent des fractions ayant les dimensions moyennes de particules (DMP) à l'état isolé suivantes, dont au moins 90 parties en poids présentent, dans de l'eau purifiée à un pH de 7,0, un temps de maintien de suspension (TMS) indiqué ci-dessous :
| DMP en nanomètres | TMS en heures |
|---|---|
| inférieure à 200 | égal ou supérieur à 24 |
| égale ou supérieure à 200 mais inférieure à 500 | égal ou supérieur à 8 |
| égale ou supérieure à 500 mais inférieure à 1000 | égal ou supérieur à 2 |
| égale ou supérieure à 1000 mais inférieure à 2000 | égal ou supérieur à 0,5. |

2. Particules de diamant suivant la revendication 1, dans lesquelles lesdites fractions présentent un temps de maintien de suspension (TMS) indiqué ci-dessous :
| DMP en nanomètres | TMS en heures |
|---|---|
| inférieure à 200 | égal ou supérieur à 48 |
| égale ou supérieure à 200 mais inférieure à 500 | égal ou supérieur à 16 |
| égale ou supérieure à 500 mais inférieure à 1000 | égal ou supérieur à 4 |
| égale ou supérieure à 1000 mais inférieure à 2000 | égal ou supérieur à 1. |

3. Particules de diamant suivant la revendication 1, dans lesquelles la fraction ayant une DMP égale ou inférieure à 200 présente un temps de maintien de suspension (TMS) d'au moins 6 heures dans un milieu aqueux acide à un pH de 4,0.

4. Procédé pour la production de particules de diamant hydrophiles, comprenant les étapes consistant : à obtenir des particules ayant une DMP à l'état isolé ne dépassant pas 2 µm par un procédé de compression statique ou à partir de diamant en agglomérats, à introduire et chauffer lesdites particules de diamant dans de l'acide sulfurique concentré, à une température d'au moins 200°C, avec ou sans un oxydant choisi entre l'acide nitrique, l'acide perchlorique, l'acide chromique, l'acide permanganique et le nitrate de potassium, des atomes et/ou groupes hydrophiles étant présents sur la surface du diamant et, en même temps, les contaminants existant parmi et sur les particules étant éliminés, et à recueillir les particules.

5. Procédé suivant la revendication 4, dans lequel l'acide sulfurique concentré consiste en acide sulfurique fumant renfermant du SO₃ absorbé.
